# EUROPEAN PATENT APPLICATION

(11) **EP 4 667 089 A1**
(43) Date of publication of application: **24.12.2025**
(21) Application number: 25183668.0
(22) Date of filing: 18.06.2025
(51) Int. Cl.: B01D 53/62, C01B 32/50, C08K 3/26, B01D 53/22, B01D 71/80, B01D 69/02, B01D 67/00, B01D 69/12, B01D 69/14, B01D 71/40, B01J 37/34, F23J 15/02, B01J 29/08, B01D 69/10, B01J 31/06

(54) **A CATALYTIC MEMBRANE FOR REMOVAL OF CARBON DIOXIDE FROM A GAS MIXTURE AND A PROCESS OF PRODUCTION THEREOF**

(30) Priority: 19.06.2024 EP 24183134
(71) Applicant: Airzyme Sweden AB, 171 65 Solna (SE)
(72) Inventor: Pursharifi, Roshan, 116 25 Stockholm (SE); Servati, Mohsen, 171 58 Solna (SE); HOSSEINI, Seyed Saeid, 1160 Brussels (BE)
(74) Representative: Metida

(57) **Abstract**

The application relates to a catalytic membrane for removal of carbon dioxide from a gas mixture. The catalytic membrane comprises a functional polymeric layer formed by plasma polymerization, having a thickness from 5 to 100 nanometres, comprising carboxylic acid functional groups and a catalytic agent. Below the functional polymeric layer, a reactive polymeric layer is positioned. This reactive polymeric layer is made of a block copolymer and has cylindrical nanochannels, each with a diameter from 10 to 200 nanometres, a length from 20 to 200 nanometres, and the immobilized catalytic agent. The catalytic membrane also includes a diffusive polymeric layer. The application also relates to a method for producing the catalytic membrane.

## Description

An invention relates to a catalytic membrane for removal of carbon dioxide from a gas mixture and a process of production thereof.

### TECHNICAL FIELD

The invention belongs to the field of gas separation membranes and catalytic systems for carbon dioxide (CO₂) capture and conversion from a gas mixture. More specifically, it relates to a nano-structured catalytic membrane configured for the selective removal and transformation of carbon dioxide from gas mixtures, such as ambient air, flue gas, or process gas streams. The invention is particularly suited for direct air capture (DAC) and point-source carbon capture. In general, such membranes can be used in applications where efficient and selective removal of carbon dioxide from a gas mixture is required. This includes carbon capture from atmospheric air and industrial emissions, such as in the energy sector, chemical processing, cement production, and steel manufacturing.

### BACKGROUND ART

Despite the pressing global need to reduce greenhouse gas emissions and mitigate the impacts of climate change caused by carbon dioxide, existing technologies for carbon dioxide capture still face significant technical and operational limitations, particularly for large scale implementations. One of the primary challenges is the low concentration of carbon dioxide in ambient air, which demands the processing of very large volumes of gas to extract a relatively small amount of carbon dioxide it contains. This makes the whole process economically unattractive and impractical, particularly taking into account high energy demand and footprint, low efficiency, high capital and operating costs among others.

In many conventional systems, the capture of carbon dioxide relies on the use of large columns packed with liquid or solid sorbents. These systems are often complex, energy intensive and sensitive to the variations in the feed and operating conditions. Moreover, most of these systems require elevated temperatures or pressure, swings in major parameters combined with precise controls, regular regeneration of the sorbent in order to function and release the captured carbon dioxide. This regeneration process is energy intensive and contributes substantially to the overall operating cost, impacting the viability of deployment of carbon capture for large-scale and distributed sites.

Existing membrane systems for CO₂ capture struggle with poor selectivity and low permeation of many membrane materials for carbon dioxide capture, resulting in low efficiency for this application. In particular, these materials often exhibit inadequate affinity for carbon dioxide under ambient conditions or suffer from degradation over time among others. As a result, boosting the key characteristics, performance and efficiency of existing membranes for this application remains a serious challenge.

Document US2020047132A1 discloses a catalytic membrane system intended for carbon dioxide separation, which relies on the immobilization of enzymes such as carbonic anhydrase within nanopores of a porous solid substrate. The membrane features a hydrophilic nanoporous region for retaining a liquid-phase transport medium, typically water, which acts as a solvent for CO₂ and supports enzyme activity. Enzyme stabilization is achieved through physical confinement and chemical anchoring to the pore walls. The system includes both hydrophilic and hydrophobic portions, which regulate liquid retention and improve the catalytic performance of the embedded enzymes. While this approach improves selectivity and catalytic efficiency compared to conventional polymer membranes, it has several limitations that remain unaddressed. The prior art membrane struggles with performance under dry or low-humidity conditions, making it unsuitable for applications such as direct air capture. The membrane also lacks structural modularity which limits its scalability and adaptability to different operational demands. What is more the enzyme activity in the membrane is dependent on the presence of the moisture. Lack of moisture causes that the enzyme efficiency decreases.

Document US2021229031A1 discloses enzyme-functionalized polymer membranes for CO₂ capture, where carbonic anhydrase (CA) enzymes are immobilized within or on the surface of hydrophilic or water-vapor permeable polymer layers. These membranes rely on facilitated transport in combination with solution-diffusion and include variants with CA dispersed in the polymer, covalently attached via linkers, or incorporated during copolymerization. The membranes typically consist of a single selective layer supported by a porous or dense mechanical backing. The membrane disclosed in US2021229031A1 relies on water vapor in the gas stream to keep the membrane active, which limits performance in dry environments such as direct air capture. What it is more its structure relies on single layer, which limits the degree of control over gas transport paths, reaction kinetics, and moisture regulation. The hydrophilic polymers used in the membrane do not offer control over pore size and their distribution.

The CO2 selective membranes existing in the prior art face significant barriers to commercialization, primarily due to complex, expensive and time-consuming manufacturing processes, which render them unsuitable for large scale production. For instance, many existing methods of productions of the membranes offer limited control over the architecture of the membrane structure, namely pore distribution and size at different layers as a key factor, which impacts the selectivity of the membrane and gas transport efficiency. Furthermore, many of the membranes in the prior art struggle with degradation or loss of catalytic agents, resulting in the loss of performance or effectiveness. For example, some catalytic agents rely heavily on moisture to maintain their activity and efficiency, thus requiring a stable hydrated environment to remain functional. Existing membrane solutions that could meet the expectations for carbon capture are not suited for large-scale production due to the complexities involved in the fabrication's steps and integration into the scalable modules. There is a particular demand for CO₂ selective membrane that can sustain performance over extended durations, retain essential humidity, minimise energy consumption, and at the same be easily and flexibly applied in a large-scale across a range of industrial sectors. There is also a clear need for simplified, cost-effective method of production of such membrane. The limitations of the existing solutions highlight the need for advanced membranes for CO₂ capture that could be manufactured at scale with less complexities and accurate control, can operate efficiently at major demanding industrial conditions with practical implications, while providing sufficiently large throughput, selectivity and kinetics for carbon dioxide capture and release.

### SUMMARY OF THE INVENTION

The present invention improves the challenges encountered in the prior art by providing a catalytic membrane for removal of carbon dioxide from a gas mixture comprising: a functional polymeric layer formed by plasma polymerization, having a thickness from 5 to 100 nanometres featured with its carboxylic acid functional groups and a catalytic agent. The membrane further comprises a reactive polymeric layer comprising a block copolymer and a plurality of cylindrical nanochannels. Each nanochannel has following dimensions: a diameter from 10 to 200 nanometres, a length from 20 to 200 nanometres, and the catalytic agent immobilized. The membrane of the invention further comprises a diffusive polymeric layer made of the same block copolymer as used in the reactive polymeric layer, which has a network of interconnected pores having dimensions larger than dimensions of the nanochannels. All layers of the membrane are arranged in a multilayer stack, according to the order presented above.

When a gas mixture comprising CO₂ is brought into contact with the catalytic membrane, the CO₂ molecules encounter the functional polymeric layer at the surface of the membrane. This functional layer is formed by plasma polymerization and has a thickness ranging from 5 to 100 nm, preferably from 5 to 50 nm. This range thickness for the functional layer keeps an optimal balance: a thickness below 5 nanometres makes it difficult to establish a uniform deposition layer with structural integrity. On the other hand, a thickness above 100 nanometres may lead to the risk of collapse of the functional layer during the drying or operational processes by playing resistance against the transport. More preferably the functional layer has thickness ranging from 5 to 50 nanometres. This layer is functionalized with carboxylic acid groups and comprises a catalytic agent. The carboxylic acid groups in the functional layer help condense water vapor, from the gas mixture or the environment adjacent to it, onto the functional layer. This results in the formation of a thin water layer on the surface of the functional layer, ensuring adequate hydrated environment for catalytic activity, particularly for enzymes like carbonic anhydrase acting as catalytic agent. The functional layer not only helps in humidity retention but also serves as the medium for immobilizing the catalytic agent. Both features are important for creating and establishing effective and yet selective interaction with CO2 molecules and the membrane. Further, the carboxylic acid groups ensure that the catalytic agent remains hydrated and functional. Once the CO₂ molecules are captured in the water layer of the functional layer, they are immediately transformed into bicarbonate ions (HCO₃⁻) by the catalytic agents. The bicarbonate ions and remaining CO₂ molecules then begin to move toward the reactive polymeric layer beneath the functional layer. This is driven by the chemical potential gradients of components across this zone. The reactive layer is composed of a block copolymer (BCP) comprising a high density of cylindrical nanochannels. These nanochannels have the following dimensions: diameters ranging from 10 to 200 nm and lengths ranging from 20 to 200 nm and comprise immobilized catalytic agent at their internal walls. The uniform geometry of the nanochannels ensures reproducible flow dynamics, maximizes surface-to-volume ratio for catalytic conversion, minimizes diffusion resistance due to non-tortuosity and avoids possible by-pass of CO2, thus enhancing selectivity, efficiency, and stable operation of the membrane under continuous operation. The cylindrical nanochannels comprise water, especially at the entry mouth and along the nanochannels, ensuring hydration of the catalytic agent embedded inside. The catalytic agent facilitates the rapid conversion of CO₂ to bicarbonate ions and vice versa. This conversion is reversible, meaning CO₂ can be rapidly entered and released within the nanochannels, creating a dynamic inter-conversion of CO₂ and bicarbonate throughout the channel. Finally, only CO₂ molecules exit nanochannels of the reactive layer before entry to the diffusive layer based on the instantaneously changing chemical potential gradient of components inside and along the channel. The diffusive layer has pores with dimensions larger than dimensions of the nanochannels with no water molecules nor catalytic agent present in its porous structure. The diffusive layer thus allows only transport of gaseous CO₂ molecules received from the reactive layer and let them to pass through rapidly with no or minimum resistance. CO₂ molecules then continuous to transport through and enter to the support polymeric layer.. The population of CO2 molecules leaving the diffusive layer of the membrane creates a CO₂ rich stream that can be collected or used in further processes. The membrane of the invention allows for effective CO₂ capture and ensures establishment of a stable humidity gradient, which is crucial for continuous catalytic operation. Through this integrated structure, the catalytic membrane facilitates rapid and reversible conversion of carbon dioxide, supports continuous operation, and enables scalable implementation of efficient CO₂ capture and release. The invention thus provides a highly effective solution for low-energy and high-performance carbon capture, that can work continuously and with high kinetics, particularly in applications requiring compact and modular systems. Plasma polymerization enables the precise deposition of the functional layer with functional groups that can hold catalytic agent and humidity, while not blocking the entry points of nanochannels of the reactive layer. Plasma polymerization also allows to the reduce the thickness of the functional layer and therefore the whole membrane. This enhances the scalability of the membrane, as the production process is simplified, the amount of material needed is reduced and the cost of production is decreased. The use of block copolymer (BCP) materials in the invention offers several advantages. The block copolymer naturally forms an integrated and seamless dual-layer structure, comprising a reactive layer with nanochannels with tunable dimensions and a diffusive layer with larger pores beneath (i.e. greater than the corresponding dimension of nanochannels: diameter of 10 to 200 nanometres and/or length of 20 to 200 nanometres). This eliminates the need to use two separate materials, simplifying manufacturing. The reactive layer, formed by BCP, has nanochannels which enhance enzyme-based reactions by improving reaction kinetics and efficiency. The high pore density and uniformity in the reactive layer ensure consistent performance, with the pore density being at least three times higher than conventional membranes. Additionally, the dual-layer design enables effective humidity management. The reactive layer retains and regulates the degree of hydration and humidity efficiently, while the diffusive layer releases excess water, preventing water retention that could reduce performance by creating transport resistance. BCP membranes also allow for customizable surface properties in both layers, improving enzyme stability and performance. The membrane is easily manufactured due to integrated dual-layer structure formed by block copolymer. This approach allows creation of both the reactive and diffusive layers from the same material, which simplifies the manufacturing process.

Preferably, the membrane further comprises a support layer located below the diffusive layer with a network of interconnected pores with dimensions larger than dimensions of the nanochannels (greater than the corresponding dimension of nanochannel: diameter of 10 to 200 nanometres and/or length of 20 to 200 nanometres). The support layer provides mechanical robustness and structural integrity to the whole membrane. The support layer can made of polyester, polypropylene, polyethylene, polyacrylonitrile, polyvinylidene fluoride (PVDF), polyethylene terephthalate (PET) or polyethersulfone (PES). PVDF and PES provide good chemical resistance and mechanical strength, ensuring long-term durability in diverse conditions. Polyester, and polypropylene offer cost-effectiveness and ease of processing, while polyacrylonitrile is known for its stability. Even more preferably, the support layer is made from one of the mentioned polymers in the form of a non-woven material. This non-woven material can bond with the diffusive layer, creating a more stable connection between the layers. Preferably, the catalytic membrane comprises a metallic support layer positioned below the support polymeric layer with a metal substrate and a surface coating of negatively charged nanoparticles e.g. silicone dioxide, oxidized carbon black or graphene oxide. In one embodiment the metallic support layer is steel layer. The term "negatively charged" refers to the surface electrochemical property of the nanoparticles coated onto the metallic support layer of the reactor. Specifically, it means that the nanoparticles exhibit a net negative surface charge, which results in a negative zeta potential when in contact with the surrounding medium. These nanoparticles impart a tailored negative zeta potential, resulting in a negatively charged top surface on the steel substrate. This surface charge creates an electrostatic field that promotes downward proton migration, establishing a localized pH gradient across the membrane. The resulting proton distribution increases the catalytic efficiency of embedded catalytic agent, such as carbonic anhydrase (CA) enzymes by accelerating the hydration of CO₂ into bicarbonate. Simultaneously, the negatively charged surface facilitates the directed diffusion of bicarbonate ions, reducing concentration polarization within the membrane. This strategic surface modification ensures a favourable hydrodynamic and electrochemical environment, offering a scalable and efficient method to boost carbon capture performance through controlled charge effects and localized pH modulation. The use of specific materials for the nanoparticle coating, such as silicone dioxide, oxidized carbon black, or graphene oxide further supports this function by ensuring chemical stability and robust negative charge under humid operating conditions.

Preferably, the surface coating of negatively charged nanoparticles has a zeta potential of -20 to - 70 mV. The term "zeta potential" refers to an electrokinetic parameter that quantifies the electrical potential at the slipping plane of a particle suspended in a fluid. It is a well-established indicator of the surface charge properties of colloidal particles or thin coatings, such as the nanoparticles deposited on the metallic support layer of the catalytic membrane. A zeta potential in the range of -20 to -70 millivolts signifies that the nanoparticle surface carries a stable and strongly negative charge, which influences the behavior of surrounding ions and molecules. In the present invention, such a zeta potential plays a role in establishing an electrostatic field at the base of the membrane, which drives proton migration across the membrane layers and contributes to the formation of a pH gradient. This electrochemical environment improves the efficiency of the catalytic process by enhancing CO₂ hydration and bicarbonate transport, thereby supporting the continuous operation of the reactor under low-energy conditions. Zeta potential is a measurable and widely recognized physical parameter in the prior art.

Preferably, the cylindrical nanochannels in the reactive polymeric layer are oriented at an angle of from 70° to 110° relative to the plane of the reactive polymeric layer. More preferably the cylindrical nanochannels are oriented substantially perpendicularly to the plane of the reactive polymeric layer. The term "substantially perpendicularly" shall be understood as allowing for a small error margin of up to ±5 degrees in the orientation of the nanochannels relative to the membrane surface. This means the nanochannels can deviate slightly from a perfect right angle or in other words they can remain predominantly vertical while still maintaining their function for effective gas transport and catalytic activity. Such orientation further enhances reproducible flow dynamics, maximizes surface-to-volume ratio for catalytic conversion, minimizes diffusion resistance, and prevents CO₂ by-pass, thus improving selectivity, efficiency, and stability of the membrane during continuous operation.

Preferably, a density of nanochannels in the reactive polymeric layer is in the range from 10¹¹ to 10¹⁶ nanochannels/m². The term "density of nanochannels" refers to the number of individual cylindrical nanochannels, present per unit area within the reactive polymeric layer of the catalytic membrane. In the context of the present invention, this value is expressed in nanochannels per square meter (nanochannels/m²) and typically falls within the range of 10¹¹ to 10¹⁶ nanochannels/m². A high density of nanochannels is an important structural feature of the membrane, as it significantly increases the available surface area for gas-solid interaction and exposure of the catalytic agent immobilized within the channels. This contributes to improved carbon dioxide uptake, catalytic conversion efficiency, and overall reaction kinetics. The uniformity and vertical alignment of these densely packed nanochannels ensure that carbon dioxide molecules have direct and consistent access to the catalytic sites, enabling high-performance operation.

Preferably, the block copolymer has a molecular weight of 100-300 kg/mol. The term "block copolymer" refers to a type of polymer composed of two or more chemically distinct polymer segments, or "blocks", that are covalently linked together in a linear arrangement. The higher molecular weight allows for the formation of more robust polymer chains, which contribute to the improvement in the mechanical strength and durability of the membrane, ensuring it can withstand the operational conditions and longevity.

Preferably, the block copolymer is selected from binary or ternary block copolymers of the form poly(X-b-Y) or poly(X-b-Y-b-Z) and wherein X, Y, and Z are selected from styrene, vinylpyridine, methyl methacrylate, ethylene oxide, propylene oxide, butylene oxide, lactic acid, polycaprolactone, dimethylsiloxane or ethylene carbonate.

Preferably, the block copolymer is selected from binary or ternary block copolymers of the form poly(X-b-Y) or poly(X-b-Y-b-Z) and wherein one of the components X, Y, or Z is present in a dominant proportion of 60 to 90 wt.% of the block copolymer. The presence of one component in a dominant proportion (60-90 wt.%), allows to a balance of mechanical strength and functionality within the membrane. It ensures that the copolymer maintains its structural integrity and mechanical properties while also providing sufficient compatibility for the catalytic agent within the nanochannels.

Preferably the block copolymer is polystyrene-block-poly(4-vinylpyridine) (PS-b-P4VP). Thus, the use of polystyrene-block-poly(4-vinylpyridine).

Preferably, the catalytic agent is selected from: carbonic anhydrase, enzyme-mimic nanoparticles, aqueous amino acids or salts thereof. The selection of catalytic agents, such as carbonic anhydrase, enzyme-mimic nanoparticles, and aqueous amino acids or salts, embedded within the nanochannels enhances the efficiency of CO₂ capture and conversion. Carbonic anhydrase supports the hydration of CO₂ into bicarbonate, which helps in the CO₂ capture process under mild conditions. Enzyme-mimic nanoparticles provide similar catalytic benefits, ensuring stability and scalability of the system. Aqueous amino acids or salts can contribute to the hydration process, offering alternative catalytic pathways.

Preferably, the catalytic membrane has a thickness from 100 to 200 micrometres (including the support layer).

Preferably, the functionalized layer is partially covering the reactive layer (meaning it does not fully cover the nanochannels of the reactive layer).

The present invention provides also a method of production of the catalytic membrane comprising the following steps: preparing a homogenous polymer solution by dissolving a block copolymer in a binary or ternary solvent mixture comprising tetrahydrofuran, dimethylformamide and dioxane, providing a support structure and casting the homogenous polymer solution uniformly onto the flat support structure. The method further comprises the step of allowing evaporation of the solvent from the homogenous polymer solution for a duration of 5 to 30 seconds. The important part of the method is inducing self-assembly governed by evaporation followed by the non-solvent induced phase separation (SNIPS) process by immersing the entire cast piece into a non-solvent bath. The method further comprises the steps of removal of residual solvent molecules comprised in the entire formed structure by keeping it immersed in a water bath for a certain period of time, such a day or two, followed by removing from the water bath and drying in ambient air or in an oven with moderate conditions. The method is thereby resulting in a formation of a reactive polymeric layer and a diffusive polymeric layer made of the same block copolymer in an integrated form, wherein:
- the reactive polymer layer has a plurality of cylindrical nanochannels oriented perpendicular to the plane of the reactive polymer layer, each nanochannel having a diameter from 10 to 200 nanometres and a length from 20 to 200 nanometres, and
- a diffusive polymeric layer has interconnected pores with dimensions larger than those of the nanochannels.

The method further comprises the step of depositing a functional polymeric layer onto the reactive polymeric layer by one-step plasma polymerization, wherein the functional polymeric layer has a thickness of 5 to 100 nanometres and comprises carboxylic acid functional groups. The next steps of the method includes loading and stabilizing the catalytic agent within the functional polymeric layer and the nanochannels of the reactive layer. The method of production described offers several advantages for creating the catalytic membrane. By using the self-assembly and non-solvent induced phase separation (SNIPS) process, the method ensures precise control over the formation of the reactive and diffusive polymeric layers with desirable proportions. Additionally, SNIPS ensures controlled nanostructure formation, allowing for uniform and tunable pore size, shape and distribution, which leads to consistent reproducibility and high-quality throughout the entire membrane. The process integrates self-assembly and phase separation into a single step, simplifying manufacturing and reducing production time, cost, and complexity compared to multistep methods. This impacts positively the scalability of the process of production of the membrane. Additionally, SNIPS is compatible with various block copolymers and additives, making it versatile. The process also results in membranes with high pore density and permeability, improving overall performance, especially in applications requiring rapid and efficient transport of molecules. Lastly, SNIPS is scalable, supporting consistent quality at larger production scales, which is crucial for industrial and commercial implementations.

One-step plasma polymerization is carried out using carboxylic acids. The use of carboxylic acids in one-step plasma polymerization enhances the functional structure of the catalytic membrane by introducing functional groups, such as carboxylic acid groups. These groups play an important role in promoting condensation of water vapor, contained within the gas mixture or the environment adjacent to the membrane surface to ensure consistent supply and retention of humidity within the nanochannels. The retained moisture forms a hydrated environment essential for the efficient catalytic activity, particularly when the catalytic agent is an enzyme like carbonic anhydrase.

Preferably, the catalytic agent is loaded into the nanochannels of reactive layer and the surface of functional layer and stabilized via physicochemical interactions, including hydrogen bonding or van der Waals forces, such that the catalytic agent remains immobilized within the nanochannels and attached to the surface during continuous operation. By utilizing these immobilization forces, the catalytic agent is held in place, preventing leaching out or loss of catalytic activity over time. This ensures that the catalytic process of converting CO₂ into bicarbonate and back into CO₂ continues effectively.

Preferably, the support structure is provided with a non-woven fabric e.g. polymeric non-woven fabric which bonds with the diffusive layer such that during water bath, the support structure is removed and the non-woven fabric remains bonded to the diffusive layer to form the support layer. The support layer provides additional structural stability to the membrane, increasing its integrity during operation.

Preferably, the method includes additional step of applying metallic support layer, below the support layer.

Preferably, membranes after completion of the SNIPS process in the water bath are retained for a period of 12 to 48 hours to ensure all the residual solvent molecules are removed from the membrane structure and ultimately the membrane is rendered solvent-free.

Preferably membranes are dried under vacuum or atmospheric at temperature from 50° to 70° C. The drying process ensures maximum removal of water molecules, making the membrane completely dry. This process preserves the membrane's integrity, including the nanochannel structure, and maintains the stability of its entire structure.

To sum up, the invention offers a number of important advantages over existing carbon dioxide removal technologies, both in terms of performance and practical implementation. The catalytic membrane described is designed with a carefully structured multilayer architecture, in which each layer and their sequence play distinct role while working synergistically with the others to enhance the overall function of the system. This integrated design enables selective and efficient removal of carbon dioxide from gas mixtures, even under low-concentration conditions such as those encountered in ambient air.

One significant advantage of the invention is its ability to operate continuously under mild temperature and pressure conditions. Unlike conventional systems that require thermal regeneration or cyclic switching, the membrane supports steady-state operation, thereby reducing energy input and enabling simpler system designs. The functionality of the membrane also does not require high-pressure. This makes the technology especially attractive for distributed or modular applications.

The invention also provides enhanced catalytic performance due to uniformly structured nanochannels within the reactive polymeric layer. These channels facilitate rapid access of large number of carbon dioxide molecules, amounting theoretically to the number of nanochannels, to the embedded catalytic agent, improving reaction kinetics and increasing conversion efficiency. The high surface area, large pore density, and optimized geometry of the nanochannels maximize the reaction rates for CO₂ conversion. In addition, the spatial confinement of the nanochannels improves stability and minimises leaching or degradation of catalytic agents during prolonged use while maximizing the interaction potential of CO2 molecules.

Humidity retention is another important advantage. The functional polymeric layer formed by plasma polymerization, is configured to promote condensation of water vapor and preserve a locally humid microenvironment around the catalytic agents embedded in the layer (due to naturally formed water layer). This is important for sustaining the catalytic reaction, especially in dry environments or when processing air with low relative humidity. Additionally, the SNIPS process used for manufacturing the membrane ensures precise control over the nanostructure formation, leading to uniform pore size and distribution, improving both performance and scalability. The SNIPS process also simplifies the manufacturing process.

Plasma polymerization offers precise functionalization of the membrane's surface, enabling the creation of a thin, uniform layer that retains humidity and ensures that the catalytic agents remain active during the CO₂ conversion process. This improves the long-term stability of the membrane and ensures efficient catalytic performance under various operating conditions.

Finally, the use of block copolymers (BCP) results in the formation of an integrated dual-layer structure, eliminating the need for separate materials for the reactive and diffusive layers, which simplifies manufacturing and reduces production costs.

These advantages result in a catalytic membrane that is compact, energy-efficient, catalytically active, and scalable. These advantages result in a process of production of the membrane, which is simplified, cost-effective and scalable.

### BRIEF DESCRIPTION OF THE DRAWINGS

Fig. 1 shows an overview of a process of carbon dioxide capture using catalytic membrane of the present invention
Fig. 2 shows an overview of a process of carbon dioxide capture using embodiment of the catalytic membrane with the support layer
Fig. 3 shows an overview of a process of carbon dioxide capture using embodiment of the catalytic membrane with a metallic layer
Fig.4 shows schematic view for the top showing the placement of the catalytic agent on the surface of the functional polymeric layer
Fig. 5 shows test setup for a capture reactor incorporating the catalytic membrane of the present invention.

### DETAILED DESCRIPTION OF THE INVENTION

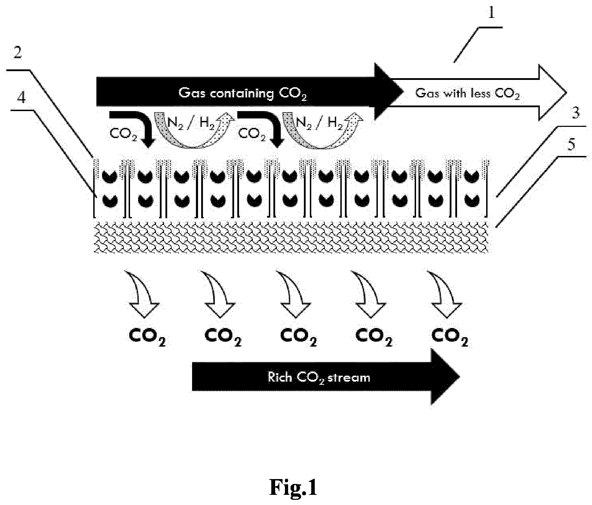

Fig. 1 shows schematically an embodiment of the catalytic membrane 1 of the present invention and the process of carbon dioxide removal using catalytic membrane 1. The catalytic membrane 1 comprises multiple layers, each serving a specific function. The first layer is a functional polymeric layer 2 formed by plasma polymerization, with a thickness ranging from 5 to 100 nanometres and more preferably from 5 to 50 nanometres. This layer comprises carboxylic acid functional groups which promote the condensation of water vapor, creating a stable thin layer of water in the functional layer. The functional layer also comprises the catalytic agent 4. Beneath the functional polymeric layer lies a reactive polymeric layer 3, which comprises a block copolymer. This layer comprises a high density of cylindrical nanochannels. Nanochannels can be oriented at an angle to the plane of the plane of the layer, preferably substantially perpendicularly to the plane of the layer. The nanochannels have a diameter ranging from 10 to 200 nanometres and a length from 20 to 200 nanometres. The nanochannels also comprise the catalytic agent 4, mostly on the bottom of the nanochannels and water, especially on the top of nanochannels. The catalytic agent 4 in the nanochannels facilitates the conversion of dissolved CO₂ into bicarbonate ions (HCO₃⁻) and vice versa. This conversion is reversible, meaning CO₂ can be rapidly absorbed and released within the nanochannels. The density of nanochannels in the reactive polymeric layer 3 may be in the range of 10¹¹ to 10¹⁶ nanochannels/m², ensuring a high surface area for CO₂ capture and conversion. The catalytic agent 4 in the reactive polymeric layer is preferably selected from carbonic anhydrase, enzyme-mimic nanoparticles, aqueous amino acids, or salts thereof, enabling the efficient hydration of CO₂. The third layer in the catalytic membrane 1 structure is the diffusive polymeric layer 5, located beneath the reactive polymeric layer 3. This layer comprises a network of interconnected pores, each with dimensions (e.g. diameter) larger than dimensions (e.g. diameter) of nanochannels. The pores of the diffusive polymeric layer 5 do not comprise water, so it only allows gaseous CO₂ to pass through. The block copolymer in the reactive 3 and diffusive layers 5 preferably has a molecular weight of 100-300 kg/mol. The material is preferably selected from binary or ternary block copolymers of the form poly(X-b-Y) or poly(X-b-Y-b-Z), where X, Y, and Z are selected from styrene, vinylpyridine, methyl methacrylate, ethylene oxide, propylene oxide, butylene oxide, lactic acid, polycaprolactone, dimethylsiloxane, or ethylene carbonate. One of the components, X, Y, or Z, may be present in a dominant proportion of 60 to 90 wt.% of the block copolymer. In particular preferably, the block copolymer used is polystyrene-block-poly(4-vinylpyridine) (PS-b-P4VP). The support layer 6 provides mechanical stability to the entire membrane 1. The support polymeric layer 6 may be made of a variety of materials such as polyester, polypropylene, polyethylene, polyacrylonitrile, polyvinylidene fluoride (PVDF), polyethylene terephthalate (PET), or polyethersulfone (PES). The catalytic membrane 1 preferably has the thickness from 100 to 200 micrometres.

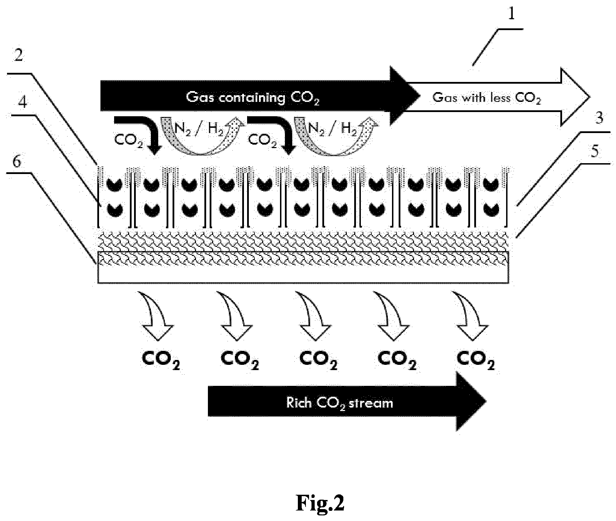

Figure 2 shows the embodiment of the catalytic membrane 1 with additional support layer 6 located below the diffusive layer 5. The support layer 6 also comprises a network of interconnected pores, each with dimensions larger than dimensions of nanochannels. The pores of the support layer 6 do not comprise water, so it further facilitates transport of CO₂ enriched stream.

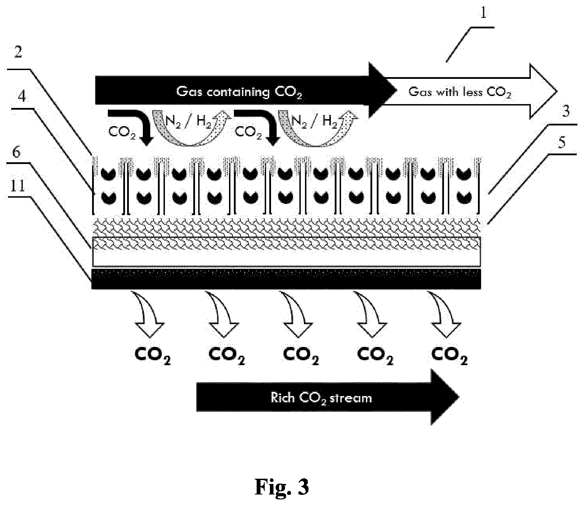

Figure 3 shows the embodiment of the catalytic membrane 1 with additional metallic support layer 11 positioned below the support polymeric layer 6. This metallic support layer comprises a metal substrate with a surface coating of negatively charged nanoparticles. The surface coating may include materials such as silicone dioxide, oxidized carbon black, or graphene oxide, and the zeta potential of the coating is preferably in the range of -20 to -70 mV. This additional metallic support layer 11 provides further mechanical stability and helps optimize the electrochemical environment. The remaining layers of the catalytic membrane 1 of the embodiment shown in Figure 2 are the same as the embodiment shown in Figure 1.

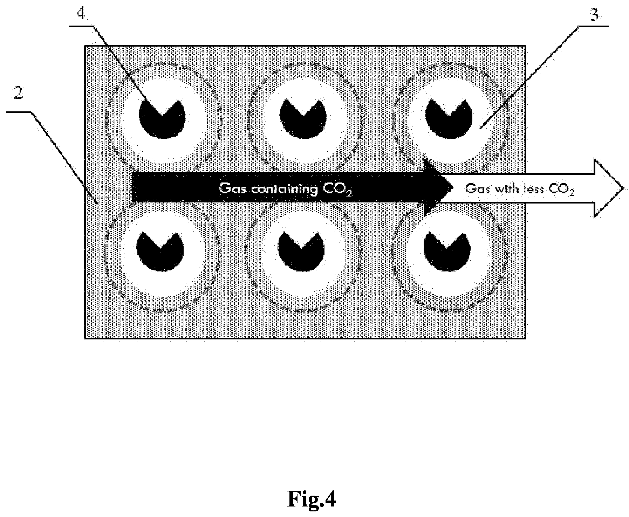

Figure 4 shows schematic view for the top showing the placement of the catalytic agent 4 on the surface of the functional polymeric layer 2. In the catalytic membrane 1, the catalytic agent 4 is primarily located in two areas. The first area is on the surface of the functional polymeric layer 2, which is the outermost layer exposed to the gas mixture, but excluding the openings to the cylindrical nanochannels of the reactive polymeric layer 3. The second area where the catalytic agent 4 is present is the internal walls of the nanochannels within the reactive polymeric layer 3. The immobilization of the catalytic agent 4 in these regions can be achieved through two main methods. First, the catalytic agent can be physically immobilized by interacting with the walls of the cylindrical nanochannels, potentially using van der Waals forces or similar physical interactions. Alternatively, chemical immobilization can occur via covalent bonding, using methods such as glutaraldehyde or polyethylenimine (PEI), which are well-known techniques in the art. As shown in Fig.4, the functionalized layer 2 is preferably partially covering the reactive polymeric layer 3, meaning it does not fully cover the nanochannels.

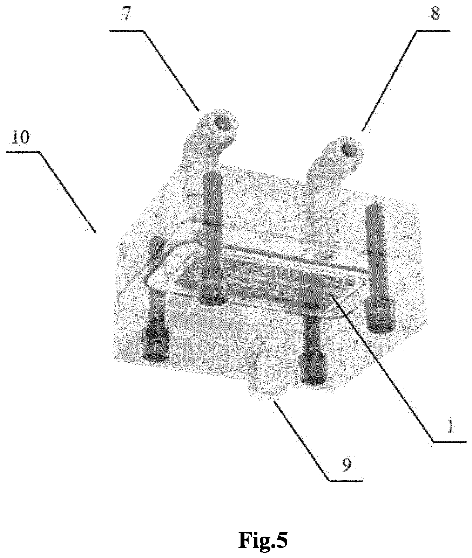

Figure 5 provides a schematic view of the reactor 10 employing an embodiment of the catalytic membrane 1 of the present invention. As shown on Fig. 5, an ambient air enters the reactor 10 via ambient air input 7, where CO₂ is selectively absorbed by the membrane. The air, with reduced CO₂, exits the reactor 10 via ambient air output 8. The concentrated CO₂ is collected through output 9 of the reactor 10, allowing for efficient CO₂ removal and capture.

The method of production of the catalytic membrane 1 of the embodiment shown in Figure 1 includes several steps, starting with the preparation of a homogeneous polymer solution. A block copolymer is dissolved in a solvent mixture comprising a tetrahydrofuran (THF), dimethylformamide (DMF), and dioxane in a binary or ternary composition. This mixture is stirred thoroughly overnight to ensure complete dissolution of the polymer. The solution becomes homogeneous and viscous (depending on the concentration of the polymer; higher concentration leads to a more viscous solution). Once the polymer solution is prepared, a support structure is provided e.g. glass plate or glass plate with non-woven fabric. The polymer solution is then spread uniformly over the surface of the support structure e.g. using a roller with a gap, ensuring an even, flat surface serving a foundation of the formation of reactive polymeric layer and the diffusive polymeric layer.

In the next step the self-assembly and non-solvent induced phase separation (SNIPS) is induced. Th solution is preferably exposed to air for 2-10 seconds, allowing initial solvent evaporation. Following this, the entire structure is immersed in a water bath, which acts as a non-solvent for the polymer. As the solvent is replaced by water, the polymer solution immediately solidifies. This transition occurs almost instantaneously, causing a formed structure to detach from the support structure e.g. glass plate. Afterward, the formed structure remains submerged in water for several minutes to enable removal of residual solvents until the membrane becomes solvent-free. The combination of self-assembly and phase inversion processes executed using a block copolymer (BCP) forms two layers with differentiated structure: nanochannels in the reactive layer 3 and micropores in the diffusive layer 5. The reactive layer is formed with cylindrical nanochannels, which are oriented substantially perpendicularly to the membrane surface. The diffusive layer 5, which is formed simultaneously, comprises interconnected micropores that are larger than the nanochannels. Once the solvent is removed, formed reactive layer 3 and diffusive layer 5 are still wet by water and then dried, preferably at an oven set between 50-70°C or placed under vacuum to dry completely. Following the formation of the reactive layer 3 and the diffusive layer 5, the process continues with plasma polymerization applied specifically to the reactive layer 3. The functional polymer layer 2 is applied via one-step plasma polymerization and is enhanced with carboxylic acid functional groups. The functional layer 2 has a thickness ranging from 5-100 nanometres. The catalytic agent 4 becomes immobilized within the functional layer and the nanochannels of the reactive polymeric layer 3. The immobilization of the catalytic agent 4 within the nanochannels (e.g. internal walls of the nanochannels) is achieved either through physical interactions (such as van der Waals forces) or chemical bonding (such as covalent bonding with functional groups in the polymer structure). The final step includes integration of the functional layer 2, the reactive layer 3 and the diffusive layer 5 with the support polymeric layer 6. While the primary immobilization of the catalytic agent 4 occurs in the reactive layer 3, some interaction with the functional layer 2 may occur due to the hydrophilic nature of the functional groups, ensuring the catalytic agent 4 remains active and hydrated in both layers.

The effectiveness of the membrane of the present invention has been measured. The description and the results of experiments are presented below.

### Experimental data 1

### Experiment 1

In Experiment 1, a catalytic membrane with a functionalized low layer having thickness around 10-15 nm was tested for CO₂ removal. The overall thickness of the fabricated membrane, excluding the support layer was 12 microns. The air flow rate of a volumetric flow of gas through the membrane was set at 5 SCCM (standard cubic centimetres per minute). The CO₂ concentration in the incoming gas mixture stream was 750 ppm (parts per million). The system was operated at 0 gauge pressure (meaning no additional pressure was applied, and the membrane was exposed to atmospheric conditions). The main focus of this experiment was to assess the effectiveness of a membrane with a functionalized surface at a relatively low thickness in capturing CO₂.

### Experiment 2

In Experiment 2, the membrane used had the same configuration as in Experiment 2, but did not have the functionalized layer. The air flow rate remained constant at 5 SCCM (standard cubic centimetres per minute), and the CO₂ concentration in the feed gas was again 750 ppm (parts per million). The feed side pressure was maintained at 0 gauge (meaning the system was also at atmospheric pressure). The purpose of this experiment was to determine the impact of membrane thickness on CO₂ capture efficiency in the absence of a functionalized surface layer. The results from this experiment were compared with those from Experiment 1 to evaluate the role of membrane functionalization in enhancing capture performance.

### Experiment 3

In Experiment 3, a fabricated membrane with a thickness of approximately 30 microns was tested for CO₂ removal. The membrane did not include the functionalized layer. Like the previous experiments, the air flow rate was 5 SCCM (standard cubic centimetres per minute), and the CO₂ concentration in the feed was 750 ppm (parts per million). The feed side pressure remained at 0 gauge (atmospheric pressure). The goal of this experiment was to explore the impact of increased membrane thickness on CO₂ capture efficiency. The results from this experiment were compared with both Experiment 1 and Experiment 2 to evaluate how thickness affects the overall membrane performance.

### Results

The results of Experiments 1, 2, 3 are presented in Table 1.

**Table 1**

| **Experiment** | **Porous medium** | **Air flow rate (SCCM)** | **CO₂ concentration in feed (ppm)** | **Feed side pressure (gauge)** | **Capture efficiency (%)** | **CO₂ at output (ppm)** |
|---|---|---|---|---|---|---|
| **1** | **Functonalized -low thickness** | **5** | **750** | **0** | **52** | **360** |
| **2** | **Low thickness** | **5** | **750** | **0** | **31** | **517,5** |
| **3** | **High thickness** | **5** | **750** | **0** | **26** | **555** |

In Experiment 1, the catalytic membrane with a functionalized low thickness layer showed a capture efficiency of 52% (percentage of CO₂ removed from the incoming gas mixture), meaning it removed 52% of the CO₂. As a result, the output gas contained 360 ppm (parts per million) of CO₂. This high capture efficiency indicates that the functionalized surface plays an important role in enhancing CO₂ removal.

In Experiment 2, the low thickness membrane without functionalization had a capture efficiency of 31% (percentage of CO₂ removed), resulting in an output CO₂ concentration of 517.5 ppm (parts per million). The reduction in efficiency compared to Experiment 1 suggests that the absence of the functionalized layer reduces the membrane's ability to efficiently capture CO₂. This highlights the importance of the functionalized surface in improving membrane performance.

In Experiment 3, the high thickness membrane exhibited the lowest capture efficiency of 26% (percentage of CO₂ removed), with an output CO₂ concentration of 555 ppm (parts per million). The decrease in performance could be due to the increased thickness, which may result in higher diffusion resistance, reducing the amount of CO₂ that can be effectively captured. This experiment demonstrates that thicker membranes may hinder CO₂ removal, potentially due to decreased interaction between the gas and the catalytic surface.

The above - presented results suggest that both membrane functionalization and thickness have a significant impact on CO₂ capture efficiency. The catalytic membrane with a functionalized low thickness layer (Experiment 1) performed best, while the high thickness membrane (Experiment 3) showed the least effective CO₂ capture.

### Experimental data 2

In this experiment, a plasma polymerized layer of approximately ≥20 nanometres was deposited onto the reactive layer (with diffusive layer). The plasma polymerization process was carried out under reduced pressure using a vacuum chamber, where acrylic acid vapour was used as the monomer. This layer was designed to impart hydrophilicity to the reactive layer surface, with the goal of enhancing wettability, which is crucial for CO₂ interaction and efficient capture.

After the plasma polymerization, the contact angle of the functionalized layer was measured to determine the change in surface properties. Prior to plasma treatment, the reactive layer (and diffusive layer) exhibited a contact angle of 85 ± 3°, indicating a mildly hydrophobic surface. After the treatment, the contact angle decreased to 34 ± 3°, confirming that the surface had transitioned to a more hydrophilic state.

### Results

This reduction in contact angle proves the success of the plasma polymerization in enhancing surface wettability, which is crucial for CO₂ capture efficiency. By reducing the contact angle, the membrane surface became more compatible with CO₂ conversion processes, ensuring better interaction between the membrane and the gas mixture.

### Experimental data 3

In this experiment, the leakage test was conducted to evaluate the membrane's ability to maintain selective permeability while ensuring CO₂ conversion integrity. The purpose was to confirm that the membrane would prevent bypass leakage, ensuring that only CO₂ passes through the membrane, while blocking other gases like nitrogen and oxygen. The test was carried out under sustained conditions at 1 bar of air pressure.

The membrane was placed in a custom-built cross-flow cell, which was designed specifically for testing the membrane's performance under these conditions. During the test, the system maintained stable pressure for one hour, and no leakage was observed. The results showed that the leakage was measured at 0%, meaning that no gas passed through the membrane other than CO₂.

This outcome indicates that the membrane was fully sealed, demonstrating its selectivity for CO₂ and confirming that it performs reliably without interference from the other gases in the mixture. The success of this test assures the membrane's capability for efficient CO₂ conversion processes, supporting long-term operation without compromising performance or leakage.

The pressure stability observed during the test, which consistently remained at 1 bar, further confirmed that the membrane's functionality was stable during the one-hour operation period.

In summary, the leakage test confirmed that the membrane met the criteria for operational integrity, providing proof of its selective CO₂ conversion ability while ensuring no bypass or leakage of other gases under the specified operating conditions.

## Claims

1. A catalytic membrane (1) for removal of carbon dioxide from a gas mixture comprising:
a. a functional polymeric layer (2) formed by plasma polymerization, having a thickness from 5 to 100 nanometres and comprising carboxylic acid functional groups and a catalytic agent (4),
b. a reactive polymeric layer (3) which is positioned below the functional polymeric layer, wherein the reactive polymeric layer is made of a block copolymer and has a plurality of cylindrical nanochannels wherein each nanochannel has the following dimensions
i. a diameter from 10 to 200 nanometres,
ii. a length from 20 to 200 nanometres,
iii. the catalytic agent (4) immobilized,
c. a diffusive polymeric layer (5) made of the same block copolymer as the reactive polymeric layer having a network of interconnected pores, wherein each pore has dimensions larger than dimensions of the nanochannel,
wherein the functional polymeric layer (2), the reactive polymeric layer (3) and the diffusive polymeric layer (5) are arranged in a multilayer stack in the membrane (1) according to mentioned order.

2. The catalytic membrane (1) according to claim 1, wherein the catalytic membrane (1) further comprises the support layer (6) located below the diffusive layer (5) having a network of interconnected pores, wherein each pore has dimensions larger than dimensions of the nanochannel.

3. The catalytic membrane (1) according to claim 2, wherein the catalytic membrane (1) further comprises a metallic support layer (11) positioned below the support polymeric layer (6) comprising a metal substrate and a surface coating of negatively charged nanoparticles.

4. The catalytic membrane (1) according to claim 3, wherein the surface coating of negatively charged nanoparticles comprises silicone dioxide, oxidized carbon black or graphene oxide and wherein the surface coating of negatively charged nanoparticles has a zeta potential of -20 to -70 mV.

5. The catalytic membrane according to any of the claims from 1 to 4, wherein a density of nanochannels in the reactive polymeric layer is in the range from 10¹¹ to 10¹⁶ nanochannels/m².

6. The catalytic membrane (1) according to any of the preceding claims, wherein the block copolymer has a molecular weight of 100-300 kg/mol.

7. The catalytic membrane (1) according to any of the preceding claims, wherein the block copolymer is of a form poly(X-b-Y) or poly(X-b-Y-b-Z) and wherein one of the components X, Y, or Z is present in a dominant proportion of 60 to 90 wt.% of the block copolymer.

8. The catalytic membrane (1) according to any of the preceding claims, wherein the catalytic agent (4) is selected from: carbonic anhydrase, enzyme-mimic nanoparticles, aqueous amino acids or salts thereof.

9. The catalytic membrane (1) according to any of the claims from 2 to 8, wherein the catalytic membrane (1) has a thickness from 100 to 200 micrometres.

10. Method of production of the catalytic membrane (1) according to any of claims from 1 to 9, comprising the following steps:
a. preparing a homogenous polymer solution by dissolving a block copolymer in a binary or ternary solvent mixture comprising tetrahydrofuran, dimethylformamide, and dioxane,
b. providing a support structure,
c. casting the homogenous polymer solution uniformly onto the support structure,
d. allowing evaporation of the solvent from the homogenous polymer solution for a duration of 5 to 30 seconds,
e. inducing self-assembly and non-solvent induced phase separation (SNIPS) process by immersing the support structure casted with the homogenous polymer solution with partially evaporated solvent, in non-solvent bath, thereby forming a reactive polymeric layer and a diffusive polymeric layer,
f. immersing the reactive polymeric layer (3) and the diffusive polymeric layer (5) in a water bath to remove the residual solvents and the support structure,
g. drying the reactive polymeric layer (3) and the diffusive layer (5),
h. depositing a functional polymeric layer (2) onto the reactive polymeric layer (3) by one-step plasma polymerization using carboxylic acids,
i. loading and stabilizing a catalytic agent (4) within a surface of the functional polymeric layer (2) and nanochannels of the reactive polymeric layer (3).

11. The method according to claim 10, wherein the support structure is provided with a non-woven fabric which bonds with the diffusive layer (5) such that during water bath, the support structure is removed, and the non-woven fabric remains bonded to the diffusive layer (5) to form the support layer (6).

12. The method according to claim 10 or 11, wherein the catalytic agent (4) is loaded into the nanochannels and stabilized via physicochemical interactions or chemical covalent bonding.

13. The method according to any of the preceding claims, wherein drying is vacuum drying or oven drying at temperature from 50°C to 70°C.

14. The method according to any of the claims from 11 to 13, including additional step of applying metallic support layer (11) below the support layer (6).

15. The method according to any of the preceding claims, wherein the reactive polymeric layer (3) and the diffusive polymeric layer (5) are retained in a water bath for period of 12 to 48 hours.
